# EUROPEAN PATENT SPECIFICATION

(11) **EP 3 382 594 B1**
(45) Date of publication and mention of the grant of the patent: **15.07.2020**
(21) Application number: 18165324.7
(22) Date of filing: 30.03.2018
(51) Int. Cl.: G06F 21/85

(54) **EMARKER AND ASSOCIATED CABLE AND METHOD**
EMARKER UND ASSOZIERTES KABEL UND VERFAHREN
EMARQUEUR ET CÂBLE ASSOCIÉ ET PROCÉDÉ

(30) Priority: 31.03.2017 US 201762479342 P; 27.10.2017 TW 106137054
(43) Date of publication of application: 03.10.2018
(73) Proprietor: VIA LABS, INC., New Taipei City 231 (TW)
(72) Inventor: Yeh, Cheng Jun, 231 New Taipei City (TW); Lin, Wei Hang, 231 New Taipei City (TW); Lin, Yu Lung, 231 New Taipei City (TW); Su, Fengkuan, 231 New Taipei City (TW)
(74) Representative: Knöner, Gregor

(56) References cited:
- EP-A1- 2 930 588
- EP-A1- 2 940 592
- EP-A1- 3 148 031
- CN-A- 106 055 507
- CN-A- 106 058 959
- US-A1- 2015 026 366
- US-A1- 2015 268 688
- US-A1- 2015 346 790
- Anonymous: "Designing a Type-C Electronically Marked Cable - Part 1", , 28 June 2016 (2016-06-28), XP055470940, Retrieved from the Internet: URL:https://www.pddnet.com/article/2016/06 /designing-type-c-electronically-marked-ca ble-part-1 [retrieved on 2018-04-26]

## Description

### FIELD OF THE INVENTION

The present invention relates to eMarker, associated cable and method, and more particularly, to USB type-C eMarker, associated cable and method for active and self-initialized protection of abnormal events such as over-current, over-voltage and/or over-temperature protection events.

### BACKGROUND OF THE INVENTION

USB (universal serial bus) type-C is an emerging and versatile interface standard; it not only supports typical USB data interconnect, but also includes various power supply options for supplying power from an electronic device to another electronic device, such as: supplying power from a portable power bank to a mobile phone, or supplying power from a host computer to a peripheral monitor, etc. The power supply options of USB type-C may include: 5Vx0.5A of USB 2.0 (V and A respectively representing volt and ampere), 5Vx0.9A of USB 3.1, 5Vx1.5A of USB BC 1.2 (for USB type-A connector, with BC being battery charging), 5Vx1.5A (for USB type-C connector), 5Vx3.0A (for USB type-C connector), and a configurable supply of USB PD (power delivery) up to 20Vx5A (for USB type-C connector).

To adapt the various power supply options, a USB type-C cable may be equipped with a CC (configuration channel) wire and an eMarker; when the cable connects a port which supports USB PD and is capable of operating as a source for providing power, the port may send a request message over the CC wire; the eMarker in the cable may receive the request message, and then respond a data message over the CC wire, such that the port may obtain information related to the cable, such as rated and/or tolerable voltage, current and/or power of the cable.

Because there are significant differences among powers of the different power supply options, supply safety becomes a main concern.

For supply safety, when a port which operates as a (power) source connects another port which operates as a (power) sink via a USB type-C cable, if both the two ports support USB PD, the two ports may interchange alert messages of over-voltage and over-current. In other words, for the aforementioned power safety mechanism to work, a key requirement is that both the source port and the sink port must support USB PD. However, support of USB PD is not mandatory for a USB type-C port; if any one of the source port and the sink port does not support USB PD, such power safety mechanism will fail to work.

The document EP 2930588 A1 describes an apparatus for determining the direction of power delivery. A host apparatus and a device are connected, wherein the connected apparatus and device are capable of changing their power delivery roles without disturbing the data transfer. The device detects connection to the host apparatus by monitoring a current through or a voltage at a CC pin.

The document EP 3148031 A1 discloses a power sink device connected to a power source device via an USB cable. The power source device signals its current providing capabilities by applying a pull-up resistor element to the configuration channel pin. The power sink device uses a pull-down resistor to indicate its current sinking capabilities.

The document CN 106 055 507 A relates to a BMC (biphase mark code) signal transmitting device that provides signal transmission and USB PD communication for an electronic device having a USB Type-C interface.

The document CN 106058959 A describes a charger for a smartphone having a USB type-C interface. The charger includes a charging line that has at one end a USB interface and at its other end a USB type-C interface. The charging line includes a line control unit and a temperature control unit. The temperature control unit is provided as a PTC thermistor that is series-connected in the configuration channel (CC) of the charging line. The line control unit is connected between the CC line and the Vbus line of the charging line. The temperature control unit senses an ambient temperature and disconnects the CC channel in the charging line if the sensed temperature exceeds a critical temperature. The line control unit then disconnects the Vbus line. As the charging line has a standard USB interface at one end and a USB Type-C interface at the other end, the CC line of the charging line is connected to the Vbus line at the standard USB side of the line.

### SUMMARY OF THE INVENTION

The invention is defined by the independent claims. Particular embodiments are set out in the dependent claims.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 illustrates a cable and an eMarker according to an embodiment of the invention;
FIG. 2 illustrates a flowchart according to an embodiment of the invention;
FIGs. 3a to 3c illustrate operations of ports, cable and eMarker in FIG. 1; and
FIG. 4 illustrates a cable and eMarkers according to an embodiment of the invention.

### DETAILED DESCRIPTION OF PREFERRED EMBODIMENTS

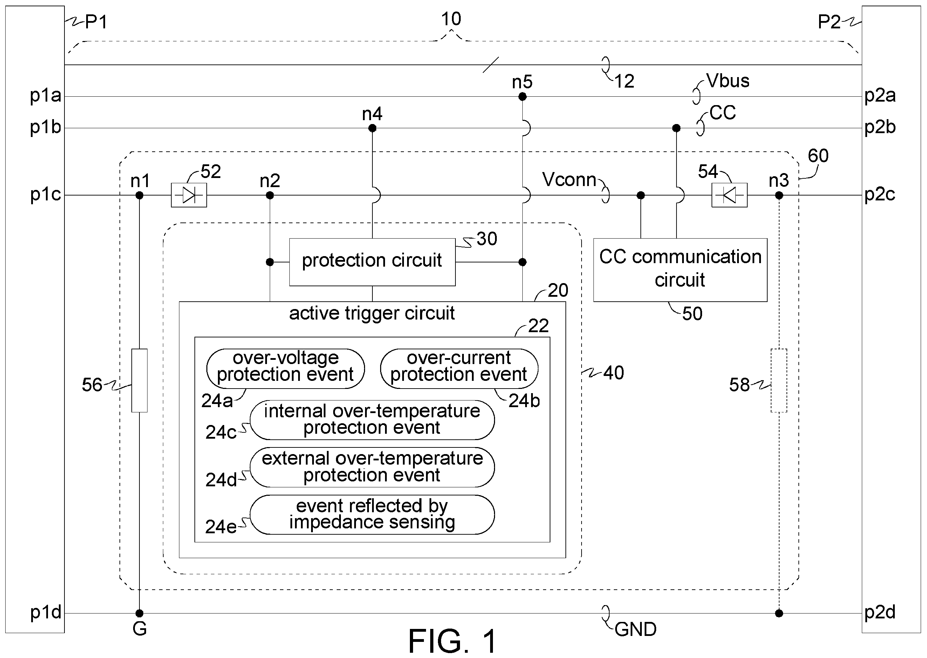

Please refer to FIG. 1 illustrating a cable 10 and an eMarker 60 according to an embodiment of the invention. The cable 10 may be a USB type-C cable, for connecting two ports P1 and P2; the two ports P1 and P2 may respectively belong to two different electronic devices (not shown). The cable 10 may include the eMarker 60, a CC wire, at least a Vbus wire and at least a GND wire; the Vbus wire may be a bus power wire, the CC wire may be a configuration channel wire, and the GND wire may be a ground wire.

The cable 10 may further include a plurality of data wires 12 for supporting USB data interconnect, e.g., a pair of differential signal wires for supporting high-speed interconnect of USB 2.0, several sideband signal wires and/or multiple differential signal wires for supporting SuperSpeed interconnect of USB 3.1.

The port P1 may include pins p1a to p1d; the pin p1a may be a Vbus (bus power) pin defined in USB type-C specification, the pin p1d may be a GND (ground) pin defined in USB type-C specification; the pin p1b may be one of CC1 and CC2 pins defined in USB type-C specification, and the pin p1c may be the other one of the CC1 and CC2 pins. Similarly, the port P2 may include pins p2a to p2d; the pin p2a may be a Vbus pin defined in USB type-C specification, the pin p2d may be a GND pin defined in USB type-C specification; the pin p2b may be one of CC1 and CC2 pins defined in USB type-C specification, and the pin p2c may be the other one of the CC1 and CC2 pins.

When the ports P1 and P2 mutually connect via the cable 10, the pin p1a of the port P1 may be coupled to the pin p2a of the port P2 via the Vbus wire, the pin p1b of the port P1 may be coupled to the pin p2b of the port P2 via the CC wire, and the pin p1d of the port P1 may be coupled to the pin p2d of the port P2 via the GND wire.

In addition, the cable 10 may further include isolation elements 52 and 54 arranged on a Vconn wire, wherein the isolation element 52 may be coupled between nodes n1 and n2, and the isolation element 54 may be coupled between nodes n2 and n3. When the ports P1 and P2 connect via the cable 10, the pin p1c of the port P1 may be coupled to the node n1, the pin p2c of the port P2 may be coupled to the node n3, and the isolation elements 52 and 54 may prevent end-to-end traverse between the pins p1c and p2c along the Vconn wire.

The cable 10 may further include two impedances 56 and 58. The impedance 56 may be coupled between the node n1 and a node G of the GND wire, the impedance 58 may be coupled between the node n3 and the node G. When the cable 10 connects the port P1, the cable 10 may present a terminal resistor, e.g., the resistor Ra defined in USB type-C specification, between the nodes n1 and G by the impedance 56. Similarly, when the cable 10 connects the port P2, the cable 10 may present a terminal resistor, e.g., the resistor Ra defined in USB type-C specification, between the nodes n3 and G by the impedance 58. In an embodiment, the impedances 56 and 58 for presenting the resistor Ra may be implemented by one single impedance; e.g., the impedance 58 may be omitted.

The eMarker 60 of the cable 10 may include a CC communication circuit 50 coupled to the CC wire at a node n4, and further include an active protection module 40 to implement the invention. In an embodiment, the CC communication circuit 50, the active protection module 40, the isolation elements 52 and 54, and the impedances 56 and 58 may be packaged in a same eMarker chip. In another embodiment, the CC communication circuit 50 and the active protection module 40 may be packaged in a same eMarker chip, while the isolation elements 52 and 54 and/or the impedances 56 and 58 may be external elements.

When the ports P1 and P2 connect via the cable 10, if one of the two ports P1 and P2 may operate as a (power) source and the other may operate as a (power) sink, the source port may supply power to the sink port. For convenience of discussion, it is assumed that the port P1 is the source port and the port P2 is the sink port.

As previously explained, the supply safety mechanism of USB PD works only if both the ports P1 and P2 support USB PD; if either one of the two ports does not support USB PD, such supply safety mechanism will not work. In addition, the supply safety mechanism of USB PD fails to consider protecting cable and eMarker. Besides, under USB PD specification, an eMarker is only designed to passively respond messages after receiving request messages from a port, not to actively initiate any supply safety mechanism.

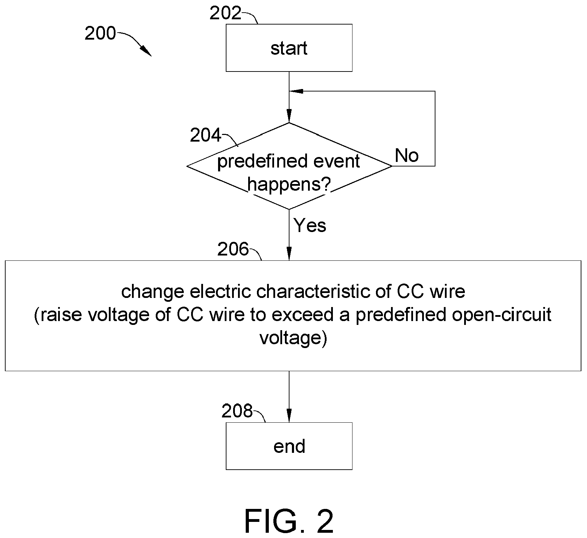

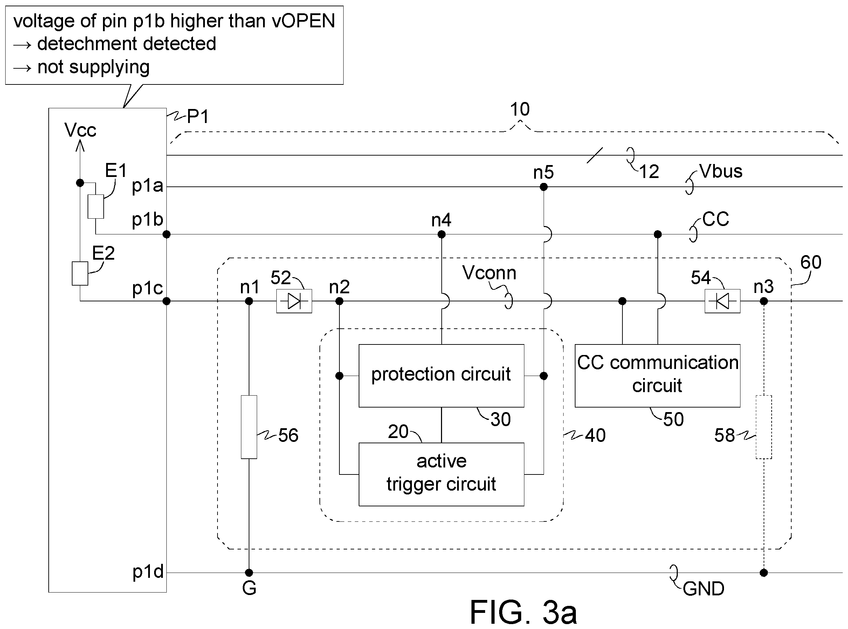

To overcome aforementioned disadvantages of USB PD (and USB type-C) specification, the eMarker 60 of the invention may be equipped with the active protection module 40, which may actively initiate a supply safety mechanism of the invention. The active protection module 40 may include an active trigger circuit 20 and a protection circuit 30. The CC communication circuit 50, the active trigger circuit 20 and the protection circuit 30 may also be coupled to the Vconn and Vbus wires, so as to drain required operation power from the Vconn or Vbus wire. The protection circuit 30 may further be coupled to the active trigger circuit 20, and coupled to the CC wire at the node n4. Along with FIG. 1, please refer to FIG. 2 and FIGs. 3a to 3c. FIG. 2 illustrates a flowchart 200 according to an embodiment of the invention; the eMarker 60 in the cable 10 may execute the flowchart 200 to actively initiate the supply safety mechanism of the invention. FIGs. 3a to 3c illustrate operations of the cable 10 and the ports P1 and P2. It is understood that FIGs 3a to 3c may only be an example embodiment of the invention; any embodiment allowing the CC communication circuit 50 and the active protection module 40 of the eMarker 60 to drain power and start operating may implement the supply safety mechanism of the invention. In an embodiment, required operation power of the eMarker 60 may be provided via the Vconn wire or the Vbus wire. In another embodiment, operation power of the eMarker 60 may be provided by an external battery or charger (not shown). In the following embodiment, an example with the eMarker 60 powered via the Vconn wire is discussed.

As shown in FIG. 3a, in the port P1 which operates as a source, the pins p1b and p1c may be coupled to a high voltage Vcc (e.g., a 3.3V or 5V dc voltage) respectively via two internal elements E1 and E2; each of the internal elements E1 and E2 may be a resistor (e.g., the resistor Rp defined in USB type-C specification) or a current source (e.g., the current source Ip defined in USB type-C specification). The port P1 may monitor voltages of the pins p1b and p1c to detect if there is another port attached to the port P1. In FIG. 3a, the port P1 already connects the cable 10, but there is no other port connecting the port P1 via the cable 10. Because the node n1 coupled to the pin p1c is also coupled to the GND wire and the ground pin p1d via the impedance 56, the voltage of the pin p1c will be pulled down. However, on the other hand, the CC wire coupled to the pin p1b does not have conductive path to the GND wire, so the voltage of the pin p1b is not pulled down, and will therefore be higher than a predefined open-circuit voltage (e.g., the voltage vOPEN defined in USB type-C specification). Because the voltage of the pin p1b is higher than the predefined open-circuit voltage, the port P1 may determine that there is no other port attached to the port P1; if there is no attachment detected, the port P1 will not supply power (voltage and current) to the Vbus wire.

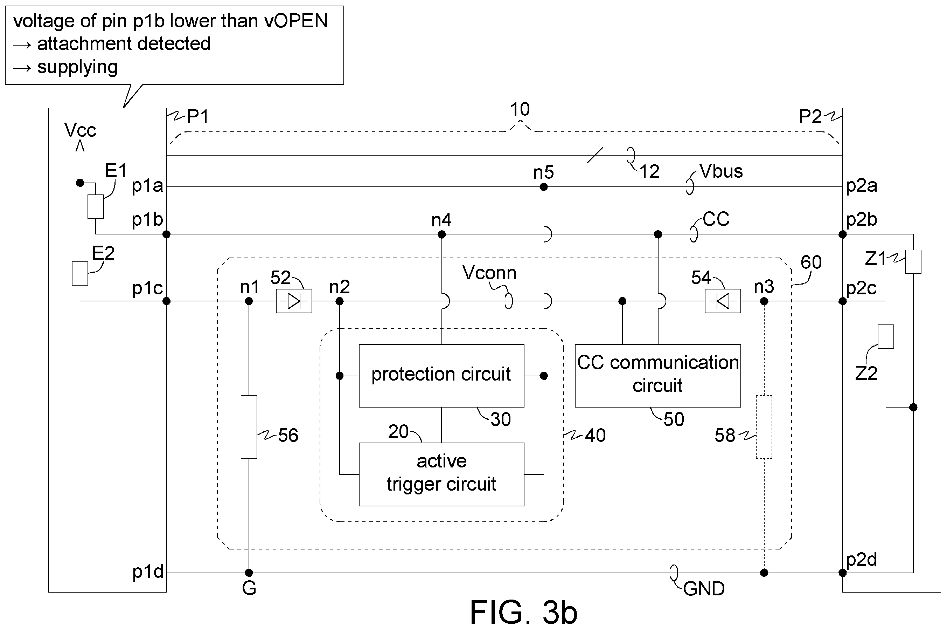

In FIG. 3b, the sink port P2 connects the port P1 via the cable 10. In the port P2, the pins p2b and p2c may be coupled to the ground pin p2d respectively via two internal impedances Z1 and Z2; wherein each of the internal impedances Z1 and Z2 may be a resistor (e.g., the resistor Rd defined in USB type-C specification). Hence, when the port P2 connects the port P1 via the cable 10, the CC wire, which is coupled to the pin p1b, may be coupled to the grounding GND wire, which is coupled to the pin p2d, via the impedance Z1; voltage of the pin p1b may therefore be pulled down to be lower than the aforementioned predefined open-circuit voltage. When the port P1 detects that the voltage of the pin p1b is lower than the predefined open-circuit voltage, the port P1 may determine that there is another port P2 attached to the port P1. Then, the port P1 may supply power to the port P2 via the Vbus wire in the cable 10; and, the port P1 or P2 may supply power to the Vconn wire via the node n1 or n3, such that the CC communication circuit 50 and the active protection module 40 in the eMarker 60 may drain power from the Vconn wire to start operating, and the active protection module 40 may execute the flowchart 200 shown in FIG. 2. Main steps of the flowchart 200 may be described as follows.

Step 202: as shown in FIG. 3b, when the port P1 supplies power to the port P2 via the cable 10, the eMarker 60 may start the flowchart 200, and the active protection module 40 may proceed to step 204 to implement the supply safety mechanism of the invention. In addition, the CC communication circuit 50 may perform bi-phase mark coded communication defined in USB PD over the CC wire, including: receiving SOP' (with SOP denoting start of packet) packets sent by the port P1 or P2, and sending SOP' packets in return. However, it is emphasized that the packets transmissions between the ports P1 and P2 are not mandatory nor necessary for the supply safety mechanism of the invention to start and proceed; whether the packets transmissions between the ports P1 and P2 occur or not, the eMarker 60 may independently implement the supply safety mechanism of the invention, as long as the eMarker 60 is supplied with power.

Step 204: if a predefined event 22 (FIG. 1) happens, then the active trigger circuit 20 in the active protection module 40 may trigger the protection circuit 30 to proceed to step 206, otherwise iterate to step 204. In an embodiment, the predefined event 22 may reflect supply abnormal events of the Vbus wire. For example, as shown in FIG. 1, the predefined event 22 may include an over-voltage protection event 24a, an over-current protection event 24b, an internal over-temperature protection event 24c, an external over-temperature protection event 24d, and an event 24e reflected by impedance sensing, etc. If any of the events occurs, the active protection module 40 may proceed to step 206.

To detect abnormal events, the active trigger circuit 20 may be coupled to the Vbus wire at the node n5, so as to determine whether the predefined event 22 happens according to one or more supply characteristics (e.g., current, voltage and/or temperature) of the Vbus wire. For example, if voltage of the Vbus wire is too high (higher than a safety voltage value), the active trigger circuit 20 may determine that the over-voltage protection event 24a has happened. If current of the Vbus wire is too large (larger than a safety current value), the active trigger circuit 20 may determine that the over-current protection event 24b has happened. In addition, the eMarker 60 may sense temperature according to changes of its semiconductor characteristics; for example, the eMarker 60 may have an internal temperature sensor to sense chip internal temperature. If the temperature is too high (higher than an internal safety temperature), the active trigger circuit 20 may determine that the internal over-temperature event 24c has happened. In an embodiment, the eMarker 60 may connect an external temperature sensor (e.g., a thermistor, not shown) to sense temperature; if the temperature is too high (higher than a safety temperature), the active trigger circuit 20 may determine that the external over-temperature event 24d has happened. In an embodiment, the eMarker 60 may sense supply characteristic of the Vbus wire by an impedance (not shown) coupled to the Vbus wire; for example, if cross voltage of the impedance is too high, it may reflect that current of the Vbus wire is too large, and the active trigger circuit 20 may determine that the event 24e reflected by impedance sensing has occurred.

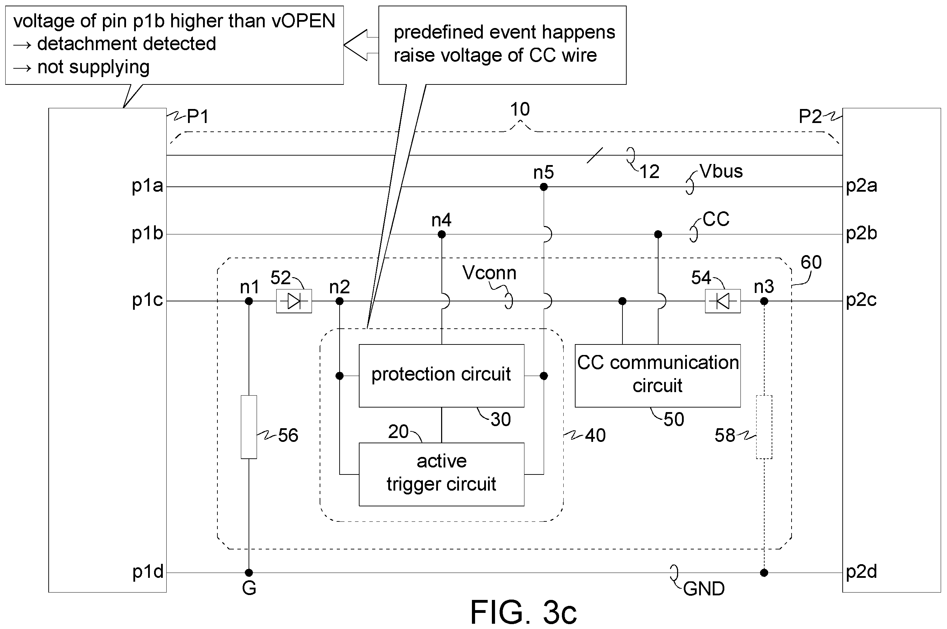

Step 206 (FIG. 2): as shown in FIG. 3c, the active trigger circuit 20 may trigger the protection circuit 30 when the predefined event 22 happens, and the protection circuit 30 may change electric characteristic of the CC wire when triggered, such that the source port P1 may detect that the sink port P2 has detached, even though the ports P1 and P2 may actually still remain connected via the cable 10. In an embodiment, the protection circuit 30 may raise the voltage of the CC wire to exceed the predefined open-circuit voltage mentioned in FIGs. 3a and 3b (e.g., the voltage vOPEN defined in USB type-C specification). Because the voltage vOPEN defined in USB type-C specification may be 1.65V or 2.75V, in an embodiment of step 206, when the predefined event 22 happens, the protection circuit 30 may cause the voltage of the CC wire to be higher than the maximum one of multiple predefined open-circuit voltages, e.g., higher than 2.75V. In an embodiment, the protection circuit 30 may couple the CC wire to the Vconn wire or the Vbus wire when the active trigger circuit 20 triggers, and utilize the voltage of the Vconn wire or the Vbus wire to cause the voltage of the CC wire to be higher than the predefined open-circuit voltage, because the voltage supplied to the Vconn wire or the Vbus wire will be higher than the predefined open-circuit voltage.

As explained by FIG. 3a, when the port P1 detects that the voltage of the pin p1b is higher than the predefined open-circuit voltage, the port P1 will determine that there is no other port attached to the port P1, and the port P1 will not supply power to the Vbus wire due to absence of attachment. Therefore, in FIG. 3c, when the predefined event happens and the protection circuit 30 raises the voltage of the CC wire to exceed the predefined open-circuit voltage, the port P1 will also detect that the voltage of the pin p1b is higher than the predefined open-circuit voltage, and determine that the port P2 has been detached, even though the port P2 may remain connected to the port P1 via the cable 10.

Step 208: when the source port P1 detects that the sink port P2 has been detached, the port P1 will stop supplying power to the Vbus wire, so the supply abnormal event may stop, the supply safety mechanism of the invention may be achieved, and the flowchart 200 may end. When the port P1 stops supplying power to the Vbus wire, power supplied to the Vconn wire also stops, and the eMarker 60 may stop operating. Afterwards, since the port P2 remains connected to the port P1 via the cable 10, the port P1 may redetect that the port P2 is attached, and restart supplying power to the Vbus wire; the flowchart 200 may also start again. In an embodiment, the cable 10 may be unplugged and plugged again between the ports P1 and P2, so the flowchart 200 may be executed again.

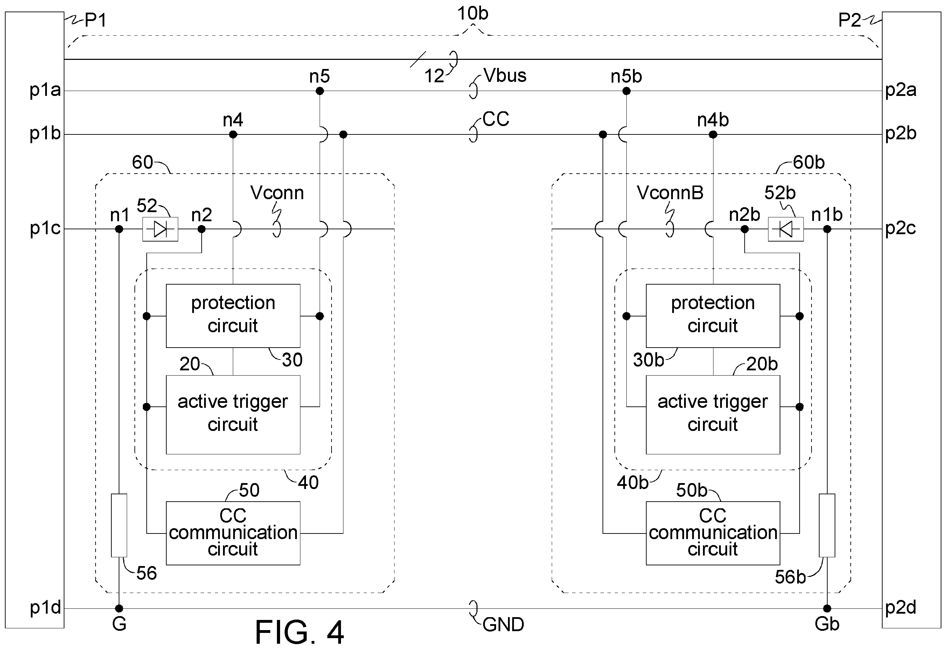

Please refer to FIG. 4 illustrating a cable 10b and eMarkers 60 and 60b according to an embodiment of the invention. The cable 10b may be a USB type-C cable, for connecting two ports P1 and P2; the ports P1 and P2 may respectively belong to different electronic devices (not shown). The cable 10b may include the eMarkers 60 and 60b, a CC wire, at least a Vbus wire and at least a GND wire; the Vbus wire may be a bus power wire, the CC wire may be a configuration channel wire, and the GND wire may be a ground wire. The cable 10b may also include multiple data wires 12 for supporting USB data interconnect, e.g., a pair of differential signal wires for supporting high-speed interconnect of USB 2.0, several sideband signal wires and/or multiple differential signal wires for supporting SuperSpeed interconnect of USB 3.1.

The port P1 may include pins p1a to p1d; the pin p1a may be a Vbus pin defined in USB type-C specification, the pin p1d may be a GND pin defined in USB type-C specification; the pin p1b may be one of CC1 and CC2 pins defined in USB-type-C specification, and the pin p1c may be the other one of the CC1 and CC2 pins. Similarly, the port P2 may include pins p2a to p2d; the pin p2a may be a Vbus pin defined in USB type-C specification, the pin p2d may be a GND pin defined in USB type-C specification; the pin p2b may be one of CC1 and CC2 pins defined in USB-type-C specification, and the pin p2c may be the other one of the CC1 and CC2 pins.

When the ports P1 and P2 connect via the cable 10b, the pin p1a of the port P1 may be coupled to the pin p2a of the port P2 via the Vbus wire, the pin p1b of the port P1 may be coupled to the pin p2b of the port P2 via the CC wire, and the pin p1d of the port P1 may be coupled to the pin p2d of the port P2 via the GND wire.

In addition, the cable 10b may further include isolation elements 52 and 52b. The isolation element 52 may be arranged on a Vconn wire, coupled between nodes n1 and n2. The isolation element 52b may be arranged on a VconnB wire, coupled between nodes n1b and n2b. When the ports P1 and P2 connect via the cable 10b, the pin p1c of the port P1 may be coupled to the node n1, the pin p2c of the port P2 may be coupled to the node n1b.

The cable 10b may further include two impedances 56 and 56b. The impedance 56 may be coupled between the node n1 and a node G of the GND wire, the impedance 56b may be coupled between the node n1b and a node Gb of the GND wire. When the cable 10 connects the port P1, the cable 10b may present a terminal resistor, e.g., the resistor Ra defined in USB type-C specification, between the nodes n1 and G by the impedance 56. Similarly, when the cable 10b connects the port P2, the cable 10b may present a terminal resistor, e.g., the resistor Ra defined in USB type-C specification, between the nodes n1b and G by the impedance 56b.

The eMarker 60 of the cable 10b may include a CC communication circuit 50 coupled to the CC wire at a node n4, and further include an active protection module 40 to implement the invention. Similarly, the eMarker 60b may include a CC communication circuit 50b coupled to the CC wire at a node n4b, and further include an active protection module 40b to implement the invention. The active protection module 40 may include an active trigger circuit 20 and a protection circuit 30, while the active protection module 40b may include an active trigger circuit 20b and a protection circuit 30b. The CC communication circuit 50, the active trigger circuit 20 and the protection circuit 30 may be coupled to the Vconn and Vbus wires, so as to drain required operation power from the Vconn or Vbus wire. The protection circuit 30 may also be coupled to the active trigger circuit 20, and coupled to the CC wire at the node n4. The protection circuit 30b may also be coupled to the active trigger circuit 20b, and coupled to the CC wire at the node n4b. The CC communication circuit 50b, the active trigger circuit 20b and the protection circuit 30b may be coupled to the VconnB and Vbus wires, so as to drain required operation power from the VconnB or Vbus wire. FIG. 4 merely illustrates an embodiment of the invention, while any arrangement which allows the CC communication circuits 50 and 50b and the active protection modules 40 and 40b to drain power and start operation may be utilized to implement the supply safety mechanism of the invention. In an embodiment, required operation power of the eMarkers 60 and 60b may be provided via the Vconn wire or the Vbus wire. In another embodiment, operation power of the eMarkers 60 and 60b may be provided by an external battery or charger (not shown). In the following embodiment, an example with the eMarkers 60 and 60b powered respectively via the Vconn wire and the VconnB wire is discussed.

In an embodiment implemented according to FIG. 4 and associated description of USB type-C specification release 1.2, at least one of the active protection modules 40 and 40b may execute steps 204 and 206 shown in FIG. 2. When the ports P1 and P2 mutually connect via the cable 10b, one of the ports P1 and P2 may supply power to the other via the Vbus wire of the cable 10b, and only one of the eMarkers 60 and 60b may drain power, such that the corresponding one of the active protection modules 40 and 40b may execute steps 204 and 206 shown in FIG. 2. The active trigger circuit 20 (or 20b) may be coupled to the Vbus wire at a node n5 (or n5b) to determine whether a supply abnormal event happens according to supply characteristic (e.g., current, voltage, temperature, etc.) of the Vbus wire, and may trigger the protection circuit 30 (or 30b) when the abnormal event happens (step 204), such that the protection circuit 30 (or 30b) may raise voltage of the CC wire to exceed the predefined open-circuit voltage (step 206), and cause the source port to detect a detachment when the two ports still remain physically connected, and therefore stop supplying power to the Vbus wire; as a result, the abnormal event will be stopped. The supply safety mechanism of the invention may be effectively implemented even if there is only one of the active protection modules 40 and 40b to raise the voltage of the CC wire to exceed the predefined open-circuit voltage when the abnormal events occur.

In another embodiment (not illustrated), both the active protection modules 40 and 40b may execute steps 204 and 206 shown in FIG. 2.

To sum up, the invention may equip eMarker and cable with active (self-initiated) supply safety mechanism, which may actively trigger protection in response to supply abnormal events, so the abnormal events may be stopped and suppressed. Accordingly, the eMarker and cable of the invention will not be limited to passive functionality defined in USB PD specification, and not be limited to passively responding messages when receiving request messages from the ports. Comparing to existed supply safety mechanism of USB PD which requires both ports P1 and P2 to support USB PD, the eMarker and cable of the invention may actively maintain supply safety even if both ports P1 and P2 do not support USB PD. Furthermore, the invention may not only protect the two ports connected via the cable, but also protect the eMarker and the cable itself.

While the invention has been described in terms of what is presently considered to be the most practical and preferred embodiments, it is to be understood that the invention needs not be limited to the disclosed embodiment. On the contrary, it is intended to cover various modifications and similar arrangements included within the scope of the appended claims which are to be accorded with the broadest interpretation so as to encompass all such modifications and similar structures.

## Claims

1. An eMarker for a cable (10) connecting a first port (P1) to a second port (P2) of two different electronic devices, the cable comprising a configuration channel, CC, wire (CC) and a bus power wire (Vbus), wherein the cable (10) is a USB type-C cable, and the eMarker (60) comprising:
an active trigger circuit (20), wherein the active trigger circuit (20) is configured to be coupled to the bus power wire (Vbus); and
a protection circuit (30) coupled to the active trigger circuit (20), the protection circuit (30) being configured to be coupled to the CC wire (CC);
wherein when the second port (P2) connects the first port (P1) via the cable (10), if a predefined event happens (24a-e) according to a supply characteristic of the bus power wire (Vbus), the active trigger circuit (20) is configured to trigger the protection circuit (30), **characterized in that** the protection circuit is configured to change an electric characteristic of the CC wire (CC) when triggered by the active trigger circuit (20), such that the first port (P1) is able to detect a detachment of the second port (P2).

2. The eMarker of claim 1, wherein when the active trigger circuit (20) triggers the protection circuit (30) to change the electric characteristic of the CC wire (CC), the active trigger circuit (20) is configured to trigger the protection circuit (30) to raise a voltage of the CC wire (CC) to exceed a predefined open-circuit voltage.

3. The eMarker of claim 1 or 2, further comprising:
a CC communication circuit (50) configured to be coupled to the CC wire (CC), the CC communication circuit (50) being configured to perform bi-phase mark coded communication over the CC wire (CC).

4. The eMarker of any of the preceding claims, wherein the predefined event (24a-e) is at least one of the following: an over-voltage protection event (24a), an over-current protection event (24b), an over-temperature protection event (24c, 24d), and an event reflected by impedance sensing (24e).

5. A USB type-C cable, comprising:
a configuration channel, CC, wire (CC); and
an eMarker (60) according to any of the preceding claims,
wherein the protection circuit (30) of the eMarker (60) is coupled to the CC wire (CC).

6. A method applied to a cable (10) connecting a first port (P1) to a second port (P2) of two different electronic devices, the cable (10) comprising a configuration channel, CC, wire (CC), a bus power wire (Vbus) and an eMarker (60), wherein the cable (10) is a USB type-C cable, wherein the eMarker (60) includes an active trigger circuit (20) coupled to the bus power wire (Vbus) and a protection circuit (30) coupled to the active trigger circuit (20) and the CC wire (CC), and the method is further **characterised by** comprising: when the second port (P2) connects the first port (P1) via the cable (10), changing, by the protection circuit (30), an electric characteristic of the CC wire (CC) if a predefined event happens (24a-e) according to a supply characteristic of the bus power wire (Vbus), such that the first port (P1) detects a detachment of the second port (P2).

7. The method of claim 6, wherein changing the electric characteristic of the CC wire (CC) is raising a voltage of the CC wire (CC) to exceed a predefined open-circuit voltage.

8. The method of claim 6 or 7, further comprising:
performing bi-phase mark coded communication over the CC wire (CC).

## Patentansprüche

1. Ein eMarker für ein Kabel (10), das einen ersten Port (P1) mit einem zweiten Port (P2) von zwei verschiedenen elektronischen Geräten verbindet, wobei das Kabel eine Konfigurationskanal, CC, -Leitung (CC) und eine Busversorgungsleitung (Vbus) umfasst, wobei das Kabel (10) ein USB-Typ-C-Kabel ist, und wobei der eMarker (60) umfasst:
eine aktive Auslöseschaltung (20), wobei die aktive Auslöseschaltung (20) konfiguriert ist, um mit der Busversorgungsleitung (Vbus) gekoppelt zu werden; und
eine Schutzschaltung (30), die mit der aktiven Auslöseschaltung (20) gekoppelt ist, wobei die Schutzschaltung (30) konfiguriert ist, um mit der CC-Leitung (CC) gekoppelt zu werden;
wobei, wenn der zweite Port (P2) den ersten Port (P1) über das Kabel (10) verbindet, die aktive Auslöseschaltung (20) konfiguriert ist, um die Schutzschaltung (30) auszulösen, wenn ein vordefiniertes Ereignis (24a-e) entsprechend einer Versorgungseigenschaft der Busversorgungsleitung (Vbus) eintritt,
**dadurch gekennzeichnet, dass** die Schutzschaltung konfiguriert ist, um eine elektrische Eigenschaft der CC-Leitung (CC) derart zu ändern, wenn sie durch die aktive Auslöseschaltung (20) ausgelöst wird, dass der erste Port (P1) in der Lage ist, eine Ablösung des zweiten Ports (P2) zu erfassen.

2. Der eMarker nach Anspruch 1, wobei, wenn die aktive Auslöseschaltung (20) die Schutzschaltung (30) auslöst, um die elektrische Eigenschaft der CC-Leitung (CC) zu ändern, die aktive Auslöseschaltung (20) konfiguriert ist, um die Schutzschaltung (30) auszulösen, um eine Spannung der CC-Leitung (CC) so zu erhöhen, dass sie eine vordefinierte Leerlaufspannung überschreitet.

3. Der eMarker nach Anspruch 1 oder 2, der ferner umfasst:
eine CC-Kommunikationsschaltung (50) die konfiguriert ist, um mit der CC-Leitung (CC) gekoppelt zu werden, wobei die CC-Kommunikationsschaltung (50) konfiguriert ist, um eine Biphase-Mark-codierte Kommunikation über die CC-Leitung (CC) durchzuführen.

4. Der eMarker nach einem der vorhergehenden Ansprüche, wobei das vordefinierte Ereignis (24a-e) mindestens eines der folgenden ist: ein Überspannungsschutz-Ereignis (24a), ein Überstromschutz-Ereignis (24b), ein Übertemperaturschutz-Ereignis (24c, 24d) und ein Ereignis, das durch Impedanzerfassung (24e) reflektiert wird.

5. Ein USB-Typ-C-Kabel, das umfasst:
eine Konfigurationskanal, CC, -Leitung (CC); und
einen eMarker (60) nach einem der vorhergehenden Ansprüche,
wobei die Schutzschaltung (30) des eMarkers (60) mit der CC-Leitung (CC) gekoppelt ist.

6. Ein Verfahren, das auf ein Kabel (10) angewendet wird, das einen ersten Port (P1) mit einem zweiten Port (P2) von zwei verschiedenen elektronischen Geräten verbindet, wobei das Kabel (10) einen Konfigurationskanal, CC-Leitung (CC), eine Busversorgungsleitung (Vbus) und einen eMarker (60) umfasst, wobei das Kabel (10) ein USB-Kabel vom Typ C ist, wobei der eMarker (60) eine aktive Auslöseschaltung (20), die mit der Busversorgungsleitung (Vbus) gekoppelt ist, und eine Schutzschaltung (30), die mit der aktiven Auslöseschaltung (20) und der CC-Leitung (CC) gekoppelt ist, umfasst, und das Verfahren ferner **dadurch gekennzeichnet ist, dass** es umfasst:
wenn der zweite Port (P2) den ersten Port (P1) über das Kabel (10) verbindet, Ändern einer elektrischen Eigenschaft der CC-Leitung (CC) durch die Schutzschaltung (30), wenn ein vordefiniertes Ereignis (24a-e) entsprechend einer Versorgungseigenschaft der Busversorgungsleitung (Vbus) eintritt, so dass der erste Port (P1) eine Ablösung des zweiten Ports (P2) erfasst.

7. Das Verfahren nach Anspruch 6, wobei die Änderung der elektrischen Eigenschaft der CC-Leitung (CC) das Anheben einer Spannung der CC-Leitung (CC) über eine vordefinierte Leerlaufspannung hinaus ist.

8. Das Verfahren nach Anspruch 6 oder 7, das ferner umfasst:
Durchführen einer Biphase-Mark-codiertern Kommunikation über die CC-Leitung (CC).

## Revendications

1. eMarqueur pour un câble (10) qui connecte un premier port (P1) à un second port (P2) de deux dispositifs électroniques différents, le câble comprenant un fil de canal de configuration, CC, (CC) et un fil d'alimentation de bus (Vbus), dans lequel le câble (10) est un câble USB de type C, et l'emarqueur (60) comprenant :
un circuit de déclencheur actif (20), dans lequel le circuit de déclencheur actif (20) est configuré pour être couplé au fil d'alimentation de bus (Vbus) ; et
un circuit de protection (30) qui est couplé au circuit de déclencheur actif (20), le circuit de protection (30) étant configuré pour être couplé au fil de CC (CC) ;
dans lequel le second port (P2) est connecté au premier port (P1) via le câble (10), et si un événement prédéfini (24a-e) survient en fonction d'une caractéristique d'alimentation du fil d'alimentation de bus (Vbus), le circuit de déclencheur actif (20) est configuré pour déclencher le circuit de protection (30), **caractérisé en ce que** le circuit de protection est configuré pour modifier une caractéristique électrique du fil de CC (CC) lorsqu'il est déclenché par le circuit de déclencheur actif (20), de telle sorte que le premier port (P1) est apte à détecter un détachement du second port (P2).

2. eMarqueur selon la revendication 1, dans lequel, lorsque le circuit de déclencheur actif (20) déclenche le circuit de protection (30) pour modifier la caractéristique électrique du fil de CC (CC), le circuit de déclencheur actif (20) est configuré pour déclencher le circuit de protection (30) pour augmenter une tension du fil de CC (CC) de telle sorte qu'elle excède une tension en circuit ouvert prédéfinie.

3. eMarqueur selon la revendication 1 ou 2, comprenant en outre :
un circuit de communication de CC (50) qui est configuré pour être couplé au fil de CC (CC), le circuit de communication de CC (50) étant configuré pour réaliser une communication biphase codée par marques sur le fil de CC (CC).

4. eMarqueur selon l'une quelconque des revendications précédentes, dans lequel l'événement prédéfini (24a-e) est au moins l'un des événements qui suivent : un événement de protection contre les surtensions (24a), un événement de protection contre les surintensités (24b), un événement de protection contre les surchauffes (24c, 24d) et un événement qui est reflété par une détection d'impédance (24e).

5. Câble USB de type C, comprenant :
un fil de canal de configuration, CC, (CC) ; et
un emarqueur (60) selon l'une quelconque des revendications précédentes,
dans lequel le circuit de protection (30) de l'emarqueur (60) est couplé au fil de CC (CC).

6. Procédé appliqué à un câble (10) qui connecte un premier port (P1) à un second port (P2) de deux dispositifs électroniques différents, le câble (10) comprenant un fil de canal de configuration, CC, (CC), un fil d'alimentation de bus (Vbus) et un emarqueur (60), dans lequel le câble (10) est un câble USB de type C, dans lequel l'emarqueur (60) inclut un circuit de déclencheur actif (20) qui est couplé au fil d'alimentation de bus (Vbus) et un circuit de protection (30) qui est couplé au circuit de déclencheur actif (20) et au fil de CC (CC), et le procédé est en outre **caractérisé en ce qu'**il comprend :
lorsque le second port (P2) est connecté au premier port (P1) via le câble (10), la modification, par le circuit de protection (30), d'une caractéristique électrique du fil de CC (CC) si un événement prédéfini (24a-e) survient en fonction d'une caractéristique d'alimentation du fil d'alimentation de bus (Vbus), de telle sorte que le premier port (P1) détecte un détachement du second port (P2).

7. Procédé selon la revendication 6, dans lequel la modification de la caractéristique électrique du fil de CC (CC) est l'augmentation d'une tension du fil de CC (CC) de telle sorte qu'elle excède une tension en circuit ouvert prédéfinie.

8. Procédé selon la revendication 6 ou 7, comprenant en outre :
la réalisation d'une communication biphase codée par marques sur le fil de CC (CC).
